# EUROPEAN PATENT APPLICATION

(11) **EP 3 441 737 A1**
(43) Date of publication of application: **13.02.2019**
(21) Application number: 17779228.0
(22) Date of filing: 07.04.2017
(51) Int. Cl.: G01K 3/14, G01N 25/18

(54) **HEAT FLUX METER AND ANOMALY DIAGNOSIS DEVICE**

(30) Priority: 08.04.2016 JP 2016078338
(71) Applicant: DENSO CORPORATION, Kariya-city, Aichi 448-8661 (JP)
(72) Inventor: HARADA, Toshikazu, Kariya-city Aichi 448-8661 (JP); SAKAIDA, Atusi, Kariya-city Aichi 448-8661 (JP); TANIGUCHI, Toshihisa, Kariya-city Aichi 448-8661 (JP); GOUKO, Norio, Kariya-city Aichi 448-8661 (JP); OKAMOTO, Keiji, Kariya-city Aichi 448-8661 (JP); SAITOU, Keita, Kariya-city Aichi 448-8661 (JP)
(74) Representative: Kuhnen & Wacker Patent- und Rechtsanwaltsbüro PartG mbB
(86) International application number: PCT/JP2017/014448
(87) International publication number: WO 2017/175850

(57) **Abstract**

A heat flux meter 2 includes a heat flux sensor 10 and a radiation unit 20. The heat flux sensor 10 has a first surface and a second surface on the opposite side to the first surface. The heat flux sensor 10 is configured to output a sensor signal corresponding to a temperature difference between the first surface side and the second surface side. A radiation unit 20 is configured to release heat from a heat generation source 202 of a target 200 to an external space. The heat flux sensor 10 is arranged on a heat transfer path between the heat generation source 202 and the radiation unit 20. The heat flux sensor 10 is arranged such that the first surface side thereof is on the heat generation source 202 side of the heat transfer path. The heat flux sensor 10 is arranged such that the second surface side thereof is on the radiation unit 20 side of the heat transfer path.

## Description

### [Technical Field]

The present disclosure relates to a heat flux meter and an abnormality diagnosis device using the heat flux meter.

### [Background Art]

For example, Patent Literature 1 discloses a heat flux sensor configured to measure a heat flux. The heat flux sensor has a first surface and a second surface on the opposite side to the first surface. Moreover, the heat flux sensor outputs a sensor signal corresponding to a temperature difference between the first surface side and the second surface side when the flow of heat passes from the first surface side to the second surface side of the heat flux sensor.

### [Citation List]

### [Patent Literature]

[PTL 1] JP 5376086 B

### [Summary of the Invention]

### [Technical Problem]

The above-described heat flux sensor is placed on a surface of a target. Thus, the heat flux released from the target to the outside of the target can be measured.

However, when heat is accumulated in the heat flux sensor, the temperature difference between the first surface side and the second surface side of the heat flux sensor decreases. For this reason, the heat flux released from the target cannot be accurately measured. In this case, in an abnormality diagnosis device using the heat flux sensor, a diagnosis cannot be accurately performed.

The present disclosure is intended to provide a technique of accurately measuring a heat flux. Moreover, the technique of the present disclosure is intended to provide the technique of accurately performing diagnosis in abnormality diagnosis.

### [Solution to the Problem]

One aspect of the technique of the present disclosure is a heat flux meter for measuring a heat flux from a target.

The heat flux meter includes a heat flux sensor (10) and a radiation unit (20). The heat flux sensor has a first surface (10a) and a second surface (10b) on the opposite side to the first surface. The heat flux sensor is configured to output a sensor signal corresponding to a temperature difference between the first surface side and the second surface side.

The radiation unit is arranged opposite to the target (200). The radiation unit is configured to release heat from a heat generation source (202) of the target to an external space of the target.

The heat flux sensor is arranged on a heat transfer path between the heat generation source and the radiation unit.

The heat flux sensor is arranged such that the first surface side thereof is on a heat generation source side of the heat transfer path. The heat flux sensor is arranged such that the second surface side thereof is on a radiation unit side of the heat transfer path.

According to such a configuration, heat released from the heat generation source passes through the heat flux sensor from the first surface side to the second surface side. Thereafter, such heat is released from the radiation unit to the external space. By the radiation unit, accumulation of heat in the heat flux sensor is reduced. Thus, a decrease in the temperature difference between the first surface side and the second surface side of the heat flux sensor due to accumulation of heat in the heat flux sensor can be suppressed. Thus, the heat flux meter as one aspect of the technique of the present disclosure can accurately measure the heat flux released from the target.

Moreover, one aspect of the technique of the present disclosure is an abnormality diagnosis device for diagnosing the presence or absence of an abnormality of the target.

The abnormality diagnosis device includes the above-described heat flux meter (2, 5) and a determination unit (3).

The determination unit is configured to determine, based on the sensor signal from the heat flux sensor, whether or not an actuation state of the target is abnormal.

According to such a configuration, the abnormality diagnosis device uses the above-described heat flux meter. Thus, the heat flux released from the target can be accurately measured. Consequently, the abnormality diagnosis device as one aspect of the technique of the present disclosure can accurately perform abnormality diagnosis.

Note that reference numerals in parentheses for each element described in this section and the claims are examples indicating a correspondence among specific elements described in later-described embodiments and the above-described elements.

### [Brief Description of the Drawings]

Fig. 1 is a view of a schematic configuration of an abnormality diagnosis device and a sectional configuration of a target in a first embodiment.
Fig. 2 is a sectional view of a heat flux meter along an II-II line of Fig. 1.
Fig. 3 is a plan view of a heat flux sensor in the first embodiment.
Fig. 4 is a sectional view of the heat flux sensor along an IV-IV line of Fig. 3.
Fig. 5 is a graph of an output waveform of the heat flux sensor in the first embodiment.
Fig. 6 is a flowchart of abnormality diagnosis control in the first embodiment.
Fig. 7 is a sectional view of part of a heat flux meter in a second embodiment.
Fig. 8 is a view of a schematic configuration of an abnormality diagnosis device in a third embodiment.

### [Description of the Embodiments]

Hereinafter, embodiments of the technique of the present disclosure will be described with reference to the drawings. Note that in description, the same reference numerals are used to represent identical or equivalent elements in each of the embodiments below.

### (First Embodiment)

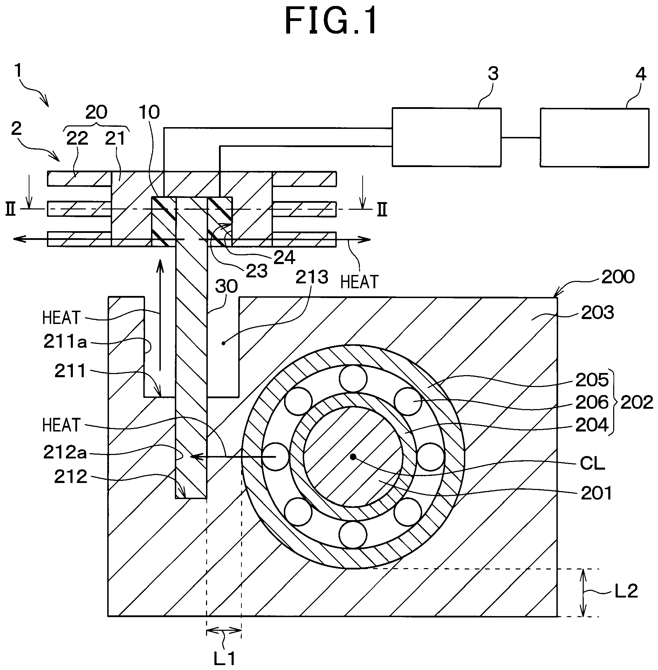

An abnormality diagnosis device 1 of the embodiment illustrated as an example in Fig. 1 is configured to perform abnormality diagnosis of a support mechanism 200 of a rotary shaft 201.

The support mechanism 200 is provided at a productive facility etc. The support mechanism 200 includes the rotary shaft 201, a bearing 202, and a housing 203.

The rotary shaft 201 is rotatable about a shaft center CL. The bearing 202 is a component configured to support the rotary shaft 201. The housing 203 is a cover member configured to cover the rotary shaft 201 and the bearing 202. The rotary shaft 201 and the bearing 202 are housed in the housing 203. The rotary shaft 201, the bearing 202, and the housing 203 are made of a metal material such as stainless steel.

The bearing 202 has an inner ring 204, an outer ring 205, and balls 206 as rolling bodies. The inner ring 204 is fixed to the rotary shaft 201. The outer ring 205 is fixed to the housing 203. The inner ring 204 is rotatable together with the rotary shaft 201. With such a configuration, the inner and outer rings 204, 205 and the balls 206 slide on each other. Note that the bearing 202 generates heat upon rotation of the rotary shaft 201. Thus, the bearing 202 is a heat generation source of the support mechanism 200.

In the present embodiment, the abnormality diagnosis device 1 includes a single heat flux meter 2, a single control device 3, and a single display device 4.

The heat flux meter 2 is a measurement device configured to measure a heat flux from the bearing 202 toward the outside of the housing 203. The heat flux is the amount of transfer of heat per unit area and unit time. In the present embodiment, the heat flux meter 2 includes a single heat flux sensor 10, a single radiation unit 20, and a single heat introduction pipe 30.

The heat flux sensor 10 is configured to detect the heat flux from the bearing 202. The heat flux is introduced from the bearing 202 to the heat flux meter 2 through the heat introduction pipe 30. The heat flux sensor 10 outputs, to the control device 3, a sensor signal corresponding to the heat flux from the bearing 202. Details of an internal structure of the heat flux sensor 10 will be described later.

The radiation unit 20 is configured to release heat from the bearing 202 to an external space of the support mechanism 200. The radiation unit 20 is a member separated from the support mechanism 200. The radiation unit 20 is disposed at a position opposite to the support mechanism 200 through the heat introduction pipe 30.

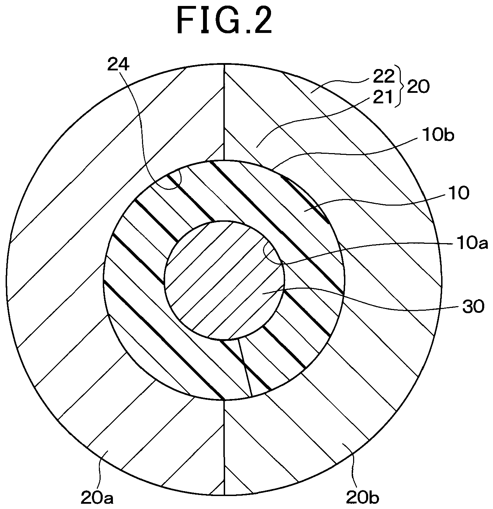

The radiation unit 20 has a body portion 21 and multiple fins 22. A fixed portion 23 is provided in the body portion 21. The fixed portion 23 is a groove for fixing the heat flux sensor 10. An inner wall surface 24 of the fixed portion 23 is in a cylindrical shape. The multiple fins 22 are configured to release heat to surrounding air of the support mechanism 200. As illustrated as an example in Fig. 2, a planar shape of each fin 22 is an annular shape.

The heat introduction pipe 30 is a heat transfer member configured to transfer heat from the bearing 202 to the radiation unit 20. The heat introduction pipe 30 is a rod-shaped member (a linear member) having a first end and a second end. In the present embodiment, the entirety of the heat introduction pipe 30 extends straight from the first end to the second end. That is, the heat introduction pipe 30 has a sectional area in the same shape across the entirety from the first end to the second end.

The heat flux sensor 10 is arranged at the first end of the heat introduction pipe 30. The second end of the heat introduction pipe 30 is arranged in the housing 203. The heat introduction pipe 30 is made of a material having higher heat conductivity than that of the housing 203. Specifically, the heat introduction pipe 30 is made of, e.g., copper or aluminum.

The housing 203 has a recessed portion 211 and an insertion hole 212. The recessed portion 211 is formed at an outer surface of the housing 203. The insertion hole 212 is formed at a bottom surface of the recessed portion 211.

The heat introduction pipe 30 is inserted into the insertion hole 212. The heat introduction pipe 30 is pressure-fitted and fixed. Thus, an inner wall surface 212a of the insertion hole 212 contacts the heat introduction pipe 30. The insertion hole 212 is formed at a position closer to the bearing 202 than the outer surface forming an outer shape of the housing 203. Thus, the second end of the heat introduction pipe 30 is arranged closer to the bearing 202 than the outer surface of the housing 203. Specifically, the heat introduction pipe 30 is arranged such that the minimum distance L1 between the heat introduction pipe 30 and the bearing 202 is smaller than the minimum distance L2 between the outer surface forming the outer shape of the housing 203 and the bearing 202. Note that the outer shape means a shape visible from the outside. Thus, the outer surface forming the outer shape does not include an inner wall surface of the recessed portion 211.

The recessed portion 211 forms a space 213 around the heat introduction pipe 30. The space 213 is a heat transfer reduction unit configured to reduce heat transfer from the heat introduction pipe 30 to the housing 203. In the present embodiment, the heat transfer reduction unit reduces transfer of heat of the bearing 202 from the heat introduction pipe 30 to the housing 203. Thus, in the present embodiment, the accuracy of measurement of the heat flux from the bearing 202 is improved. Note that a material (e.g., a heat insulating material) having lower heat conductivity than that of the housing 203 may be arranged in the space 213. In this case, the heat insulating material is the heat transfer reduction unit.

The heat flux sensor 10 is arranged between the radiation unit 20 and the heat introduction pipe 30. The radiation unit 20 is arranged at the first end of the heat introduction pipe 30. The radiation unit 20 is connected to the heat introduction pipe 30 through the heat flux sensor 10. Thus, heat released from the bearing 202 is released to an external space of the housing 203 by way of the following heat transfer path. Specifically, heat released from the bearing 202 is released from the bearing 202 to the external space of the housing 203 through the heat introduction pipe 30 and the heat flux sensor 10. Thus, the heat flux sensor 10 is arranged on the heat transfer path between the bearing 202 as the heat generation source and the radiation unit 20.

As illustrated as an example in Fig. 2, the heat flux sensor 10 is in the form of a sheet having a first surface 10a and a second surface 10b on the opposite side to the first surface 10a. The heat flux sensor 10 is fixed to the periphery of the heat introduction pipe 30 with the heat flux sensor 10 being wound in a roll shape. That is, the heat flux sensor 10 is fixed to an outer peripheral surface of the heat introduction pipe 30 with the heat flux sensor 10 being bent along the outer peripheral surface of the heat introduction pipe 30. The heat flux sensor 10 covers the entire area of the periphery of the heat introduction pipe 30. The first surface 10a of the heat flux sensor 10 is an inner surface. The first surface 10a contacts the heat introduction pipe 30. On the other hand, the second surface 10b of the heat flux sensor 10 is an outer surface. The second surface 10b contacts the body portion 21 of the radiation unit 20. That is, the heat flux sensor 10 is configured such that the first surface 10a is arranged on the heat generation source side of the heat transfer path and the second surface 10b is arranged on a radiation unit side of the heat transfer path. In the present embodiment, the radiation unit 20 includes two components 20a, 20b. These two components 20a, 20b sandwich the heat flux sensor 10 placed at the heat introduction pipe 30. Thus, the heat flux sensor 10 contacts each of the radiation unit 20 and the heat introduction pipe 30 with as small clearance as possible.

As illustrated as an example in Fig. 1, the heat flux sensor 10 is connected to an input side of the control device 3. The control device 3 is configured to diagnose the presence or absence of an abnormality in an actuation state of the bearing 202 (to perform abnormality diagnosis control). The abnormality diagnosis control is the control of determining, based on the sensor signal from the heat flux sensor 10, whether or not the actuation state of the bearing 202 is abnormal. Thus, the control device 3 is equivalent to a determination unit configured to determine, based on the sensor signal from the heat flux sensor 10, whether or not the actuation state of the bearing 202 is abnormal.

The display device 4 is connected to an output side of the control device 3. The control device 3 causes the display device 4 to display a determination result of the actuation state. The control device 3 has, for example, a microcomputer with a CPU, and a storage device such as a memory with a non-transitory tangible computer readable storage medium.

The display device 4 is an informing device configured to inform a user (e.g., a maintenance worker for a device) of the determination result of the actuation state. For example, a liquid crystal display is used as one example of the display device 4.

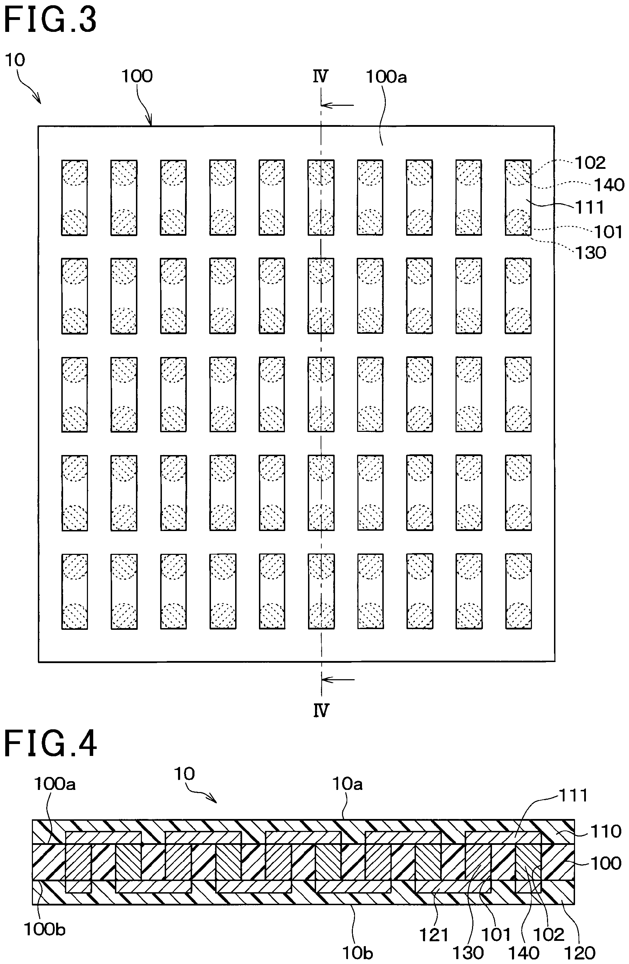

Next, a specific structure of the heat flux sensor 10 will be described. As illustrated as an example in Figs. 3 and 4, the heat flux sensor 10 is configured such that an insulating base material 100, a front protection member 110, and a back protection member 120 are integrated together. The heat flux sensor 10 is configured such that first and second thermoelectric members 130, 140 are alternately connected in series inside the integrated members. An outer surface of the front protection member 110 is the first surface 10a of the heat flux sensor 10. An outer surface of the back protection member 120 is the second surface 10b of the heat flux sensor 10. Note that Figs. 3 and 4 illustrate, as an example, the heat flux sensor 10 in a state before installation. Moreover, in Fig. 3, the front protection member 110 is not shown.

The insulating base material 100, the front protection member 110, and the back protection member 120 are in a film shape, and are made of a resin material exhibiting flexibility, such as thermoplastic resin. At the insulating base material 100, multiple first and second via holes 101, 102 penetrating the insulating base material 100 in a thickness direction thereof are formed. The first and second via holes 101, 102 are filled with the first and second thermoelectric members 130, 140 made of different thermoelectric materials such as metals or semiconductors. A connection portion between the first and second thermoelectric members 130, 140 is configured as follows. The connection portion between the first and second thermoelectric members 130, 140 on one side is formed from a front conductor pattern 111 arranged on a front surface 100a of the insulating base material 100. The connection portion between the first and second thermoelectric members 130, 140 on the other side is formed from a front conductor pattern 121 arranged on a front surface 100b of the insulating base material 100.

The flow of heat passes through the heat flux sensor 10 in a direction from the first surface 10a toward the second surface 10b. In this state, a temperature difference between the first surface 10a side and the second surface 10b side of the heat flux sensor 10 is generated. That is, a temperature difference between the connection portion between the first and second thermoelectric members 130, 140 on one side and the connection portion between the first and second thermoelectric members 130, 140 on the other side is generated. Thus, thermoelectric power due to the Seebeck effect is generated at the first and second thermoelectric members 130, 140. The heat flux sensor 10 outputs the generated thermoelectric power as the sensor signal (e.g., a voltage signal).

Next, the abnormality diagnosis control performed by the control device 3 will be described.

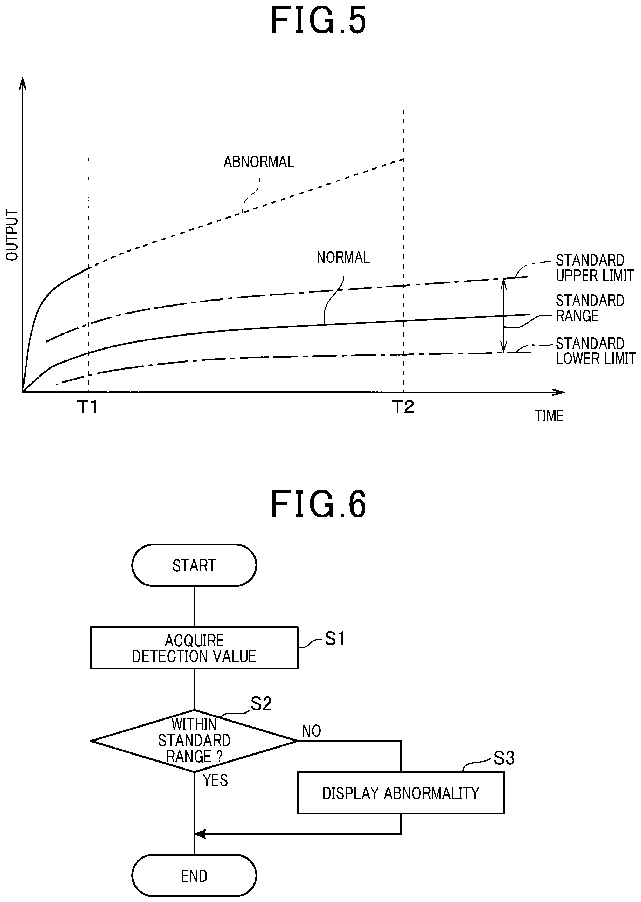

When the rotary shaft 201 rotates, the bearing 202 generates heat. Thus, the heat flux is released from the bearing 202 to the outside of the bearing 202. Thus, as illustrated as an example in Fig. 5, an output value of the heat flux sensor 10 changes over time after the start of rotation of the rotary shaft 201. The horizontal axis of Fig. 5 indicates the time elapsed after the start of rotation of the rotary shaft 201. The vertical axis of Fig. 5 indicates the output value of the heat flux sensor 10.

In the case of a normal actuation state of the bearing 202, the output value of the heat flux sensor 10 is at a magnitude within a predetermined range. On the other hand, in the case of an abnormal actuation state of the bearing 202, the output value of the heat flux sensor 10 is at a magnitude (a magnitude outside the range) deviating from the predetermined range. Note that the predetermined range is a standard range including an upper limit (a standard upper limit) and a lower limit (a standard lower limit). For example, in the case of increasing the amount of heat generation of the bearing 202 due to load fluctuation or abnormal vibration, the heat flux from the bearing 202 increases. Thus, as illustrated as an example in Fig. 5, the output value at a time point T1 in the abnormal state is greater than that in the normal state. Thereafter, when the time further advances and reaches a time T2, the amount of heat generation of the bearing 202 further increases. As a result, it is expected that the device is damaged. When the rotary shaft 201 can no longer rotate for any reason, the amount of heat generation of the bearing 202 decreases. In this case, the heat flux from the bearing 202 decreases, and the output value of the heat flux sensor 10 becomes smaller than that in the normal state.

Thus, in the present embodiment, the control device 3 performs the abnormality diagnosis control based on the sensor signal from the heat flux sensor 10, as illustrated as an example in Fig. 6. Note that each step (each process step) illustrated as an example in Fig. 6 is equivalent to a function implementation unit configured to implement various functions. Moreover, each step is implemented in such a manner that the microcomputer (the CPU) executes a program stored in, e.g., ROM, for example. Note that the method for implementing each step (the function implementation unit) is not limited to the above-described method by software. Examples of other methods include an implementation method by an electronic circuit such as an IC or an LSI (a method by hardware). Note that an implementation method by a combination of the hardware and the software may be employed.

In the present embodiment, the control device 3 acquires a detection value of the heat flux sensor 10 (step S1). For example, the output value at the time point T1 illustrated as an example in Fig. 5 is acquired. This output value is a voltage value. Note that the control device 3 may acquire, as the detection value, a correction value obtained by correction of the output value of the heat flux sensor 10. Alternatively, the control device 3 may acquire, as the detection value, a heat flux value calculated from the output value of the heat flux sensor 10.

Subsequently, the control device 3 determines whether or not the detection value is within the preset standard range (step S2). As illustrated as an example in Fig. 5, the standard range is the range between the standard upper limit and the standard lower limit. The standard range is stored in advance in the storage device provided in the control device 3. The standard range is set in advance based on a change in the detection value of the heat flux sensor 10 over time after the start of rotation of the rotary shaft 201 in the normal actuation state of the bearing 202.

In a case where the control device 3 determines that the detection value is equal to or less than the standard upper limit and equal to or greater than the standard lower limit (step S2: YES), the control flow ends. Then, the control device 3 executes the process of step S1 again. On the other hand in a case where the control device 3 determines that the detection value exceeds the standard upper limit or falls below the standard lower limit (step S2: NO), the flow proceeds to process of step S3.

The control device 3 outputs a control signal for displaying an abnormality to the display device 4 (step S3). Accordingly, the display device 4 displays an indication of the abnormal actuation state of the bearing 202.

In this manner, the abnormality diagnosis device 1 of the present embodiment notifies, by the abnormality diagnosis control of the control device 3, the user of the abnormal actuation state of the bearing 202 of the support mechanism 200 as a diagnosis target. Note that the determination process of step S2 is performed by comparison between the detection value for a predetermined elapsed time and the standard value for the same elapsed time. As illustrated as an example in Fig. 5, the determination process of step S2 may be performed by comparison between a waveform (a detection waveform) shown by the detection value until the predetermined elapsed time after the start of rotation of the rotary shaft 201 and a waveform (a standard waveform) shown by the standard value until the same predetermined elapsed time. Specifically, the process may be performed in such a manner that an upper limit waveform and a lower limit waveform indicating a change in the standard upper and lower limits until the processing elapsed time after the start of rotation of the rotary shaft 201 are compared with the above-described detection waveform. As described above, the determination process of step S2 is performed by comparison between the detection result obtained from the sensor signal of the heat flux sensor 10 and the preset determination criteria for the abnormality diagnosis.

The heat flux meter 2 of the present embodiment includes the heat flux sensor 10, the radiation unit 20, and the heat introduction pipe 30. The heat flux sensor 10 is arranged on the heat transfer path between the heat introduction pipe 30 and the radiation unit 20 on the heat transfer path between the bearing 202 and the radiation unit 20. The heat flux sensor 10 is arranged such that the first surface 10a is on the bearing 202 side of the heat transfer path. The heat flux sensor 10 is arranged such that the second surface 10b is on the radiation unit 20 side of the heat transfer path.

Thus, heat released from the bearing 202 passes through the heat flux sensor 10 from the first surface 10a side to the second surface 10b side. Thereafter, such heat is released from the radiation unit 20 to the external space. By the radiation unit 20, accumulation of heat in the heat flux sensor 10 is reduced. Thus, a decrease in the temperature difference between the first surface 10a side and the second surface 10b side of the heat flux sensor 10 due to accumulation of heat in the heat flux sensor 10 can be suppressed.

Thus, in the heat flux meter 2 of the present embodiment, the heat flux released from the bearing 202 can be accurately measured. The abnormality diagnosis device 1 of the present embodiment uses the heat flux meter 2. Thus, in the abnormality diagnosis device 1 of the present embodiment, the abnormality diagnosis can be accurately performed.

Moreover, in the heat flux meter 2 of the present embodiment, the heat introduction pipe 30 is made of the material having higher heat conductivity than that of the housing 203. The heat introduction pipe 30 is the rod-shaped member having the first end and the second end. In the present embodiment, the heat flux sensor 10 is arranged at the first end of the heat introduction pipe 30. Moreover, the second end of the heat introduction pipe 30 is arranged closer to the bearing 202 than the outer surface forming the outer shape of the housing 203.

Thus, in the heat flux meter 2 of the present embodiment, a lag between the timing of releasing heat from the bearing 202 and the timing of measuring the heat flux by the heat flux sensor 10 can be more reduced as compared to the case of arranging the heat flux sensor 10 on the outer surface of the housing 203. Moreover, in the heat flux meter 2, heat radially released from the bearing 202 is transferred with the heat being concentrated on the heat introduction pipe 30. Thus, in the heat flux meter 2, the flow of heat (the heat flux) passing through the heat flux sensor 10 is more increased as compared to the case of arranging the heat flux sensor 10 on the outer surface of the housing 203. With this configuration, the accuracy of measurement of the heat flux is improved in the heat flux meter 2 of the present embodiment.

Further, in the heat flux meter 2 of the present embodiment, the heat flux sensor 10 exhibits the flexibility. The heat flux sensor 10 is fixed to the outer peripheral surface of the heat introduction pipe 30 with the heat flux sensor 10 being bent along the outer peripheral surface of the heat introduction pipe 30. Thus, in the heat flux meter 2 of the present embodiment, the heat flux radially released from the outer peripheral surface of the heat introduction pipe 30 can be measured.

### (Second Embodiment)

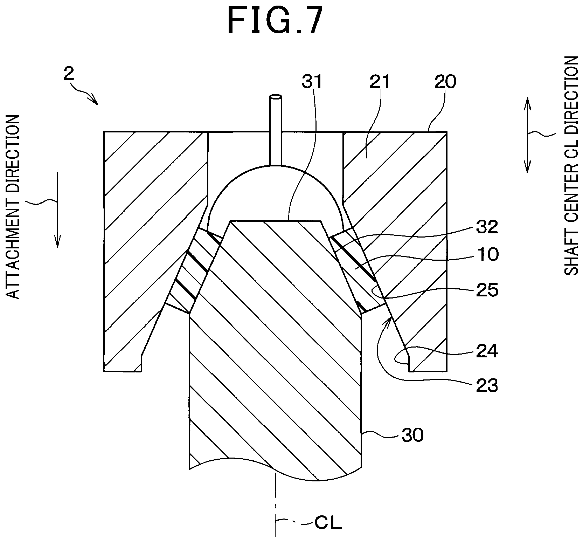

As illustrated as an example in Fig. 7, the present embodiment is different from the first embodiment in the structure of connecting a heat flux sensor 10, a radiation unit 20, and a heat introduction pipe 30 in a heat flux meter 2. Other configurations of an abnormality diagnosis device 1 etc. are the same as those of the first embodiment. Thus, differences from the first embodiment will be mainly described below. The same reference numerals are used to represent the same elements, and description thereof will be omitted.

The heat introduction pipe 30 has a first tapered surface 32 on a tip end 31 side of the heat introduction pipe 30.
The first tapered surface 32 is an outer peripheral surface of the heat introduction pipe 30. The diameter of the first tapered surface 32 gradually decreases toward the tip end 31 side of the heat introduction pipe 30.

The radiation unit 20 has a second tapered surface 25. The second tapered surface 25 is included in an inner wall surface 24 of a fixed portion 23 of the radiation unit 20. Of the inner wall surface 24 of the fixed portion 23, the diameter of the second tapered surface 25 gradually decreases toward the tip end 31 side of the heat introduction pipe 30 in a shaft center CL direction of the heat introduction pipe 30. Note that in Fig. 7, fins 22 of the radiation unit 20 are not shown.

The heat flux sensor 10 is fixed to the first tapered surface 32. In this state, the radiation unit 20 is attached to the heat introduction pipe 30. Upon attachment of the radiation unit 20, the heat introduction pipe 30 and the radiation unit 20 are pressed against each other in the shaft center CL direction of the heat introduction pipe 30. As a result, a force sandwiching the heat flux sensor 10 between the first tapered surface 32 and the second tapered surface 25 is generated. Thus, the heat flux sensor 10 can contact each of the radiation unit 20 and the heat introduction pipe 30 with as small clearance as possible.

### (Third Embodiment)

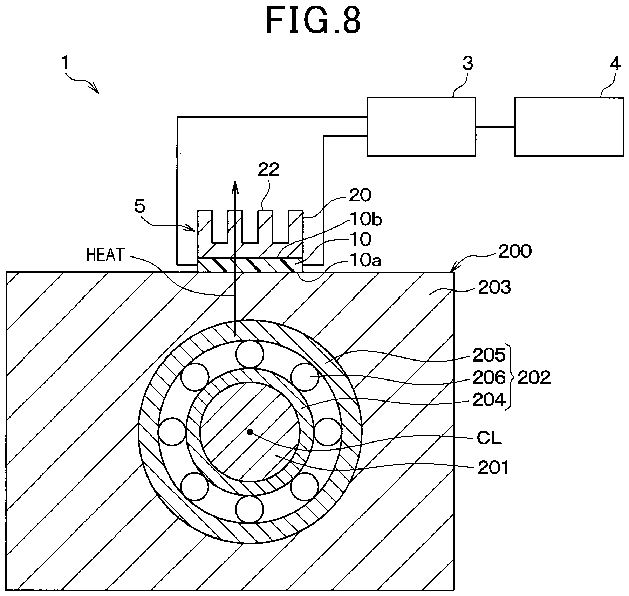

As illustrated as an example in Fig. 8, a heat flux meter 5 of the present embodiment includes a heat flux sensor 10 and a radiation unit 20. The present embodiment is different from the heat flux meter 2 of the first embodiment in that the heat flux meter 5 does not include a heat introduction pipe 30. Other configurations of an abnormality diagnosis device 1 etc. are the same as those of the first embodiment. Thus, differences from the first embodiment will be mainly described below. The same reference numerals are used to represent the same elements, and description thereof will be omitted.

The heat flux sensor 10 is placed on an outer surface of a housing 203. The radiation unit 20 has multiple fins 22. A first surface 10a of the heat flux sensor 10 contacts the outer surface of the housing 203. A second surface 10b of the heat flux sensor 10 contacts the radiation unit 20. Thus, heat released from a bearing 202 is released from the radiation unit 20 to an external space of the housing 203 through the heat flux sensor 10. Thus, the heat flux sensor 10 is arranged on a heat transfer path between the bearing 202 as a heat generation source and the radiation unit 20. Thus, in the present embodiment, advantageous effects similar to those of the first embodiment are also obtained.

### (Other Embodiments)

(1) In each of the above-described embodiments, the configuration in which the heat flux sensor 10 and the radiation unit 20 directly contact each other has been described, but the present disclosure is not limited to the above. In other embodiments, other members forming the heat transfer path may be present between the heat flux sensor 10 and the radiation unit 20, for example.
(2) In each of the above-described embodiments, the heat flux sensor 10 with the structure illustrated as an example in Figs. 3 and 4 is employed. However, the structure of the heat flux sensor 10 is not limited to the above. As long as the heat flux sensor 10 outputs the sensor signal corresponding to the temperature difference between the first surface 10a side and the second surface 10b side, sensors with other structures may be employed as other embodiments, for example.
(3) In each of the above-described embodiments, the support mechanism 200 of the rotary shaft 201 has been described as an example of a target for measurement by the heat flux meter 2, 5, but the present disclosure is not limited to the above. The measurement target may be one releasing heat from the heat generation source to the external space.
(4) In the first embodiment, the following heat introduction pipe 30 has been described as an example. Specifically, the heat introduction pipe 30 of the first embodiment is in such a shape that the entirety from the first end to the second end extends straight. That is, the heat introduction pipe 30 has the sectional area in the same shape across the entirety from the first end to the second end. However, the shape of the heat introduction pipe 30 is not limited to the above. For example, part of the heat introduction pipe 30 may be bent as other embodiments. Alternatively, the sectional area may be in a shape different from those of other portions in the middle from the first end to the second end.
(5) In each of the above-describe embodiments, the example where the measurement result of the heat flux meter 2, 5 is used for the abnormality diagnosis of the actuation state has been described, but the present disclosure is not limited to the above. For example, the measurement result of the heat flux meter 2, 5 may be, as other embodiments, displayed on the display device 4. In this case, the control device 3 calculates the heat flux value based on the sensor signal from the heat flux sensor 10. The control device 3 causes the display device 4 to display the calculated heat flux value. Alternatively, the control device 3 may cause the display device 4 to display the output value (the voltage value) from the heat flux sensor 10.
(6) The technique of the present disclosure is not limited to the contents of each of the above-described embodiments. The technique of the present disclosure may be changed as necessary within the scope of the claims. The technique of the present disclosure includes various modification examples and modifications within an equivalent range. Moreover, the above-described embodiments are not unrelated to each other, and can be combined as necessary except for obviously impossible combinations. Further, in each of the above-described embodiments, the components of the embodiments are not necessarily essential unless otherwise clearly described that the components are essential and assumed that the components are clearly essential in principle, for example. In addition, in each of the above-described embodiments, the number, numerical values, amounts, ranges, etc. of the components of the embodiment are not limited to specific numbers and ranges unless otherwise clearly described and clearly limited to specific numbers and ranges in principle, for example. Moreover, in each of the above-described embodiments, the materials, shapes, position relationships, etc. of the components etc. are not limited to these materials, shapes, position relationships, etc. unless otherwise clearly described and limited to specific materials, shapes, position relationships, etc. in principle, for example.

### (Summary)

According to a first aspect described in part or the entirety of each of the above-described embodiments, a heat flux meter as one aspect of the technique of the present disclosure includes a heat flux sensor and a radiation unit. The heat flux sensor is arranged on a heat transfer path between a heat generation source of a target and the radiation unit.

According to a second aspect, the heat flux meter further includes a heat transfer member. The heat flux sensor is arranged on a heat transfer path between the heat transfer member and the radiation unit. As described above, the heat transfer member is preferably used. In a case where the heat generation source of the target is covered with a cover member, a material forming the heat transfer member is preferably a material having higher heat conductivity than that of the cover member.

According to a third aspect, the heat flux sensor is configured such that the first surface contacts the heat transfer member and the second surface contacts the radiation unit. As described above, the heat flux sensor preferably contacts each of the heat transfer member and the radiation unit.

According to a fourth aspect, the heat transfer member is a rod-shaped member having a first end and a second end. The heat flux sensor is arranged at the first end of the heat transfer member. In a case where the heat generation source of the target is covered with the cover member, the heat flux meter is configured such that the cover member is provided with an insertion hole and the second end of the heat transfer member is arranged in the insertion hole. With this configuration, the heat flux meter can be configured such that the second end of the heat transfer member is arranged closer to the heat generation source than an outer surface forming an outer shape of the cover member.

As described above, the second end of the heat transfer member is arranged closer to the heat generation source. Thus, in the heat flux meter, a lag between the timing of releasing heat from the heat generation source and the timing of measuring a heat flux by the heat flux sensor can be more reduced as compared to the case of arranging the heat flux sensor on the outer surface of the cover member. Moreover, in the heat flux meter, heat released from the heat generation source is transferred with the heat being concentrated on the heat transfer member. Thus, in the heat flux meter, the flow of heat (the heat flux) passing through the heat flux sensor is more increased as compared to the case of arranging the heat flux sensor on the outer surface of the cover member. With this configuration, the accuracy of measurement of the heat flux is improved in the heat flux meter.

According to a fifth aspect, the heat flux sensor exhibits flexibility. The heat flux sensor is fixed to an outer peripheral surface of the heat transfer member with the heat flux sensor being bent along the outer peripheral surface of the heat transfer member. With this configuration, the heat flux meter can measure the heat flux radially released from the outer peripheral surface of the heat transfer member.

According to a sixth aspect, an abnormality diagnosis device includes the heat flux meter according to any one of the first to fifth aspects, and a determination unit configured to determine, based on the sensor signal from the heat flux sensor, whether or not an actuation state of the target is abnormal.

### [Reference Signs List]

- 1: abnormality diagnosis device
- 2, 5: heat flux meter
- 10: heat flux sensor
- 10a: first surface of heat flux sensor
- 10b: second surface of heat flux sensor
- 20: radiation unit
- 30: heat introduction pipe (heat transfer member)
- 200: support mechanism (target) of rotary shaft
- 202: bearing (heat generation source)
- 203: housing (cover member)

## Claims

1. A heat flux meter for measuring a heat flux from a target, comprising:
a heat flux sensor (10) having a first surface (10a) and a second surface (10b) on an opposite side to the first surface and configured to output a sensor signal corresponding to a temperature difference between the first surface side and the second surface side; and
a radiation unit (20) arranged opposite to the target (200) and configured to release heat from a heat generation source (202) of the target to an external space of the target,
wherein the heat flux sensor is arranged on a heat transfer path between the heat generation source and the radiation unit,
the heat flux sensor is arranged such that the first surface side thereof is on a heat generation source side of the heat transfer path, and the heat flux sensor is arranged such that the second surface side thereof is on a radiation unit side of the heat transfer path.

2. The heat flux meter according to claim 1, further comprising:
a heat transfer member (30) configured to transfer the heat from the heat generation source to the radiation unit,
wherein the heat flux sensor is arranged on a heat transfer path between the heat transfer member and the radiation unit.

3. The heat flux meter according to claim 2, wherein
the heat flux sensor is configured such that the first surface contacts the heat transfer member and the second surface contacts the radiation unit.

4. The heat flux meter according to claim 2 or 3, wherein
the heat transfer member is a rod-shaped member having a first end and a second end, and
the heat flux sensor is arranged at the first end of the heat transfer member.

5. The heat flux meter according to claim 4, wherein
the heat flux sensor is fixed to an outer peripheral surface of the heat transfer member with the heat flux sensor being bent along the outer peripheral surface of the heat transfer member.

6. An abnormality diagnosis device for diagnosing a presence or absence of an abnormality of a target, comprising:
the heat flux meter (2, 5) according to any one of claims 1 to 5; and
a determination unit (3) configured to determine, based on the sensor signal from the heat flux sensor, whether or not an actuation state of the target is abnormal.
